(19) Europäisches Patentamt
European Patent Office
Office européen des brevets

(11) **EP 4 592 712 A1**

(12) **EUROPEAN PATENT APPLICATION**
published in accordance with Art. 153(4) EPC

(43) Date of publication:
**30.07.2025   Bulletin 2025/31**

(21) Application number: **23869725.4**

(22) Date of filing: **09.06.2023**

(51) International Patent Classification (IPC):
**G01S 19/23** (2010.01)   **G01D 21/02** (2006.01)
**G01D 7/08** (2006.01)

(52) Cooperative Patent Classification (CPC):
**G01D 7/08; G01D 21/02; G01S 19/23**

(86) International application number:
**PCT/CN2023/099546**

(87) International publication number:
**WO 2024/066476 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.09.2022   CN 202211183855**

(71) Applicant: **Qianxun Spatial Intelligence Inc.
Yangpu District
Shanghai 200438 (CN)**

(72) Inventors:
• **ZHOU, Xuehui
  Shanghai 200438 (CN)**
• **HE, Haibo
  Shanghai 200438 (CN)**
• **HAN, Bing
  Shanghai 200438 (CN)**
• **LIU, Junning
  Shanghai 200438 (CN)**

(74) Representative: **Kraus & Lederer PartGmbB
Thomas-Wimmer-Ring 15
80539 München (DE)**

(54) **IONOSPHERIC SCINTILLATION EARLY WARNING METHOD AND DEVICE, RECEIVER TERMINAL, MEDIUM, AND PRODUCT**

(57)    The present application relates to the technical field of positioning, and discloses an ionospheric scintillation early warning method and device, a receiver terminal, a medium, and a product. The ionospheric scintillation early waning method comprises: acquiring a first ionospheric amplitude scintillation index of at least two satellites of a GNSS and a pierce point position corresponding to each satellite in the at least two satellites; acquiring parameter information and data quality information of a target reference station; according to the first ionospheric amplitude scintillation index, the pierce point position, and position information of the target reference station, determining a target ionospheric amplitude scintillation index corresponding to the target reference station; determining an amplitude scintillation index threshold for the ionospheric scintillation early warning of the reference station according to the target ionospheric amplitude scintillation index and the data quality information, and according to a real-time ionospheric amplitude scintillation index and the amplitude scintillation index threshold, determining whether the ionospheric scintillation early warning is carried out on the target reference station, According to embodiments of the present application, the ionospheric interference to the referencestation can be early warned.

Fig. 1

**Description**

**CROSS-REFERENCE TO RELATED APPLICATION**

The present application claims priority to Chinese Patent Application No. 202211183855.3 filed on September 27, 2022, which is incorporated herein by reference in its entirety.

**TECHNICAL FIELD**

The present application relates to the field of positioning technology, and in particular, to an ionospheric scintillation early warning method, an ionospheric scintillation early warning device, a receiver terminal, a medium and a product.

**BACKGROUND**

Ionospheric scintillation refers to a phenomenon that the amplitude, the phase, the polarization state and the angle of arrival of the radio wave which propagates through a structure with irregular ionospheric electron density change rapidly to cause the rapid fading of the signal which is received by the receiver. The ionospheric scintillation will cause the amplitude fading of the navigation signal which arrives the ground, the loss of carrier phase for several full cycles, and the sudden drop of carrier-to-noise ratio, results in the increase in the bit error rate and the deviation of carrier phase measurement values during the capturing and the tracking by the receiver, and further causes carrier phase cycle slip and tracking loop loss of lock. As a result, user's positioning accuracy and positioning success rate are reduced, and availability and integrity of the satellite navigation system will be affected in severe cases.

In the related art, whether the ionospheric scintillation occurs is determined mainly by calculating the ionospheric amplitude scintillation index (S4), but the safe and reliable operation of the reference station in the global navigation satellite system (GNSS) is the basis for providing services to users. The occurrence of ionospheric scintillation does not mean that the reference station is subject to ionospheric scintillation interference. Therefore, how to perform early warning on the reference station subject to the ionospheric scintillation interference is an urgent technical problem to be solved.

**SUMMARY**

Embodiments of the present application provide an ionospheric scintillation early warning method, an ionospheric scintillation early warning device, a receiver terminal, a medium, and a product, which can solve the problem that the early warning on the ionospheric scintillation interference which the reference station is subject to cannot be performed.

In a first aspect, embodiments of the present application provide an ionospheric scintillation early warning method which includes:

acquiring first ionospheric amplitude scintillation indexes of at least two satellites of GNSS and positions which respectively correspond to pierce points of the at least two satellites;
acquiring parameter information and data quality information of a target reference station, wherein the parameter information comprises at least position information of the target reference station, and the data quality information comprises at least a cycle slip ratio;
determining a target ionospheric amplitude scintillation index which corresponds to the target reference station based on the first ionospheric amplitude scintillation indexes, the positions of the pierce points, and the position information of the target reference station;
determining an amplitude scintillation index threshold for early warning a reference station of an ionospheric scintillation based on the target ionospheric amplitude scintillation index and the data quality information; and
determining whether to early warn on a target reference station of an ionospheric scintillation based on a real-time ionospheric amplitude scintillation index and the amplitude scintillation index threshold.

In a second aspect, embodiments of the present application provide an ionospheric scintillation early warning device which includes:

a first acquisition module configured to acquire first ionospheric amplitude scintillation indexes of at least two satellites of GNSS and positions which respectively correspond to pierce points of the at least two satellites;
a second acquisition module configured to acquire parameter information and data quality information of a target reference station, wherein the parameter information comprises at least position information of the target reference station, and the data quality information comprises at least a cycle slip ratio;

a first determining module configured to determine a target ionospheric amplitude scintillation index which corresponds to the target reference station based on the first ionospheric amplitude scintillation indexes, the positions of the pierce points, and the position information of the target reference station;

a second determining module configured to determine an amplitude scintillation index threshold for early warning a reference station of an ionospheric scintillation based on the target ionospheric amplitude scintillation index and the data quality information; and

a third determining module configured to determine whether to early warn the target reference station of an ionospheric scintillation based on a real-time ionospheric amplitude scintillation index and the amplitude scintillation index threshold.

In a third aspect, embodiments of the present application provide a GNSS receiver terminal which includes a processor and a memory having stored computer program instructions thereon, in which the processor reads and executes the computer program instructions to implement the ionospheric scintillation early warning method of the first aspect.

In a fourth aspect, embodiments of the present application provide a computer-readable storage medium having stored thereon computer program instructions which, when executed by a processor, implement the ionospheric scintillation early warning method of the first aspect.

In a fifth aspect, embodiments of the present application provide a computer program product, in which instructions in the computer program product, when executed by a processor of a GNSS receiver terminal, cause the GNSS receiver terminal to perform the ionospheric scintillation early warning method of the first aspect.

In the embodiments of the present application, the first ionospheric amplitude scintillation indexes of at least two satellites in GNSS and the positions of the pierce points which correspond to the at least two satellites each are acquired; the parameter information and the data quality information of the target reference station are acquired; the target ionospheric amplitude scintillation index which corresponds to the target reference station is determined based on the first ionospheric amplitude scintillation indexes, the positions of the pierce points, and the position information of the target reference station; the amplitude scintillation index threshold for early warning a reference station of an ionospheric scintillation is determined based on the target ionospheric amplitude scintillation index and the data quality information; and whether to early warn the target reference station of the ionospheric scintillation based on the real-time ionospheric amplitude scintillation index and the amplitude scintillation index threshold. In this way, it can be determined whether the reference station is subject to ionospheric scintillation interference, and the early warning can be performed when the ionospheric scintillation interference is received, thereby ensuring that the reference station provides accurate observation data to the observation station.

**BRIEF DESCRIPTION OF THE DRAWINGS**

In order to illustrate technical solutions of embodiments of the present application more clearly, the drawings required for the embodiments of the present application will be briefly described. For a person skilled in the art, other drawings can also be obtained from these drawings without any inventive effort.

Fig. 1 is a schematic flowchart of an ionospheric scintillation early warning method according to embodiments of the present application;

Fig. 2 is a schematic diagram of a positional relationship between a satellite and an ionospheric monitoring station according to embodiments of the present application;

Fig. 3 is a schematic diagram of a positional relationship between a grid which is included in a range which corresponds to a target reference station and a pierce point according to embodiments of the present application;

Fig. 4 is a schematic diagram of a fitting relationship between a cycle slip ratio and an ionospheric amplitude scintillation index according to embodiments of the present application;

Fig. 5 is a schematic structural diagram of an ionospheric scintillation early warning device according to embodiments of the present application; and

Fig. 6 is a schematic structural diagram of a GNSS receiver terminal according to embodiments of the present application.

**DETAILED DESCRIPTION**

Features and exemplary embodiments of various aspects of the present application will be described in detail below. In order to make the objects, technical solutions and advantages of the present application clearer, the present application is further described in detail below with reference to the drawings and specific embodiments. It should be understood that the specific embodiments described herein are only intended to explain the present application, but not to limit the present application. For those skilled in the art, the present application can be implemented without some of these specific details. The following description of the embodiments is only to provide a better understanding of the present application by illustrating examples of the present application.

It should be noted that, in the present application, the relational terms, such as first and second, are used merely to distinguish one entity or operation from another entity or operation, without necessarily requiring or implying any actual such relationships or orders for these entities or operations. Moreover, the terms "comprise", "include", or any other variants thereof, are intended to represent a non-exclusive inclusion, such that a process, method, article or device including a series of elements includes not only those elements, but also other elements that are not explicitly listed or elements inherent to such a process, method, article or device. Without more constraints, the elements following an expression "comprise/include..." do not exclude the existence of additional identical elements in the process, method, article or device that includes the elements.

The ionospheric scintillation early warning method, the ionospheric scintillation early warning device, the receiver terminal, the medium, and the product according to the embodiments of the present application will be described in detail using the specific embodiments and the application scenarios thereof with reference to the drawings.

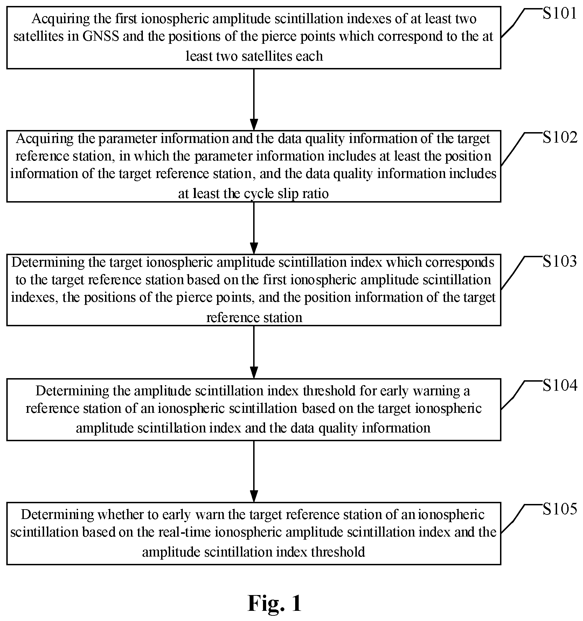

Fig. 1 is a schematic flowchart of an ionospheric scintillation early warning method according to embodiments of the present application. As shown in Fig. 1, the ionospheric scintillation early warning method may include:

S101: acquiring the first ionospheric amplitude scintillation indexes of at least two satellites in GNSS and the positions of the pierce points which correspond to the at least two satellites each;

S102: acquiring the parameter information and the data quality information of the target reference station, in which the parameter information includes at least the position information of the target reference station, and the data quality information includes at least the cycle slip ratio;

S103: determining the target ionospheric amplitude scintillation index which corresponds to the target reference station based on the first ionospheric amplitude scintillation indexes, the positions of the pierce points, and the position information of the target reference station;

S104: determining the amplitude scintillation index threshold for early warning a reference station of an ionospheric scintillation based on the target ionospheric amplitude scintillation index and the data quality information; and

S105: determining whether to early warn the target reference station of an ionospheric scintillation based on a real-time ionospheric amplitude scintillation index and the amplitude scintillation index threshold.

Specific embodiments of the above steps will be described in detail below.

In the embodiments of the present application, the first ionospheric amplitude scintillation indexes of at least two satellites in GNSS and the positions of the pierce points which correspond to the at least two satellites each are acquired; the parameter information and the data quality information of the target reference station are acquired; the target ionospheric amplitude scintillation index which corresponds to the target reference station is determined based on the first ionospheric amplitude scintillation indexes, the positions of the pierce points, and the position information of the target reference station; the amplitude scintillation index threshold for early warning the reference station of an ionospheric scintillation is determined based on the target ionospheric amplitude scintillation index and the data quality information; and whether to early warn the target reference station of an ionospheric scintillation is determined based on the real-time ionospheric amplitude scintillation index and the amplitude scintillation index threshold. In this way, it can be determined whether the reference station is subject to ionospheric scintillation interference, and the early warning can be performed when the ionospheric scintillation interference is received, thereby ensuring that the reference station provides accurate observation data to the observation station.

In some possible implementations of the embodiments of the present application, in S101, the acquired first ionospheric amplitude scintillation indexes of at least two satellites in GNSS and the acquired positions of the pierce points which correspond to the at least two satellites each may be the ionospheric amplitude scintillation indexes and the positions of the pierce points in the time period in which the ionosphere is relatively active. Generally, the stronger the sunlight is, the more active the ionosphere is, and the time period in which the ionosphere is active is usually between 13:00 and 15:00.

In some possible implementations of the embodiments of the present application, in S101, the ionospheric amplitude scintillation index of the satellite may be calculated based the following formula (1):

$$S4_m = \sqrt{\frac{\langle SI_m^2 \rangle - \langle SI_m \rangle^2}{\langle SI_m \rangle^2}} \qquad (1)$$

In formula (1), $S4_m$ is the ionospheric amplitude scintillation index of the satellite m, $\langle\rangle$ represents the one-minute average value, $SI_m = NBP_m - WBP_m$, $NBP_m$ is the narrowband power of the satellite m, and $WBP_m$ is the broadband power of the satellite m.

In some possible implementations of the embodiments of the present application,

$$WBP_m = \sum_{i=1}^{20} I_i^2 + \sum_{i=1}^{20} Q_i^2, \quad NBP_m = \left(\sum_{i=1}^{20} I_i\right)^2 + \left(\sum_{i=1}^{20} Q_i\right)^2$$

, $I_i$ and $Q_i$ are the correlation peaks of the I branch and the Q branch, respectively, which are output by the tracking loop of the ionospheric monitoring station once every 0.02 seconds.

In some possible implementations of the embodiments of the present application, the elimination trend filtering may be performed on $SI$. Specifically, the low-pass filtering is performed on $SI$ to obtain $SI_{lpf}$, and $SI'$ after trend elimination is obtained using $SI' = SI / SI_{lpf}$. Then the ionospheric amplitude scintillation index of the satellite m is calculated using

$$S4_m = \sqrt{\frac{\left\langle SI_m'^{\,2}\right\rangle - \left\langle SI_m'\right\rangle^2}{\left\langle SI_m'\right\rangle^2}}.$$

In some possible implementations of the embodiments of the present application, in S101, the position ( $\varphi_{IPP}^{m-P}$ , $\lambda_{IPP}^{m-P}$ ) of the satellite m relative to the pierce point $IPP_{m-P}$ of the ionospheric monitoring station P may be calculated based on the following formula (2):

$$\varphi_{IPP}^{m-P} = \arcsin\left(\sin\varphi_p \cos\psi + \cos\varphi_p \sin\psi \cos As_{m-P}\right)$$

$$\lambda_{IPP}^{m-P} = \lambda_p + \arcsin\left(\frac{\sin\psi \sin As_{m-P}}{\cos\varphi_{IPP}^{m-P}}\right) \tag{2}$$

In formula (2), $\varphi_{IPP}^{m-P}$ is the longitude of the satellite m relative to the pierce point $IPP_{m-P}$ of the ionospheric monitoring station $P$, $\lambda_{IPP}^{m-P}$ is the latitude of the satellite m relative to the pierce point $IPP_{m-P}$ of the ionospheric monitoring station P, $\varphi_p$ and $\lambda_p$ are the longitude and the latitude of the ionospheric monitoring station $P$, respectively, $AS_{m-P}$ is the azimuth angle of the satellite m relative to the ionospheric monitoring station $P$,

$$\psi = \frac{\pi}{2} - E_{m-P} - \arcsin\left(\frac{R_E \cos E_{m-P}}{R_E + H}\right)$$

, $E_{m-P}$ is the elevation angle of the satellite m relative to the ionospheric monitoring station $P$, $R_E$ is the radius of the Earth, and $H$ is the ionospheric height.

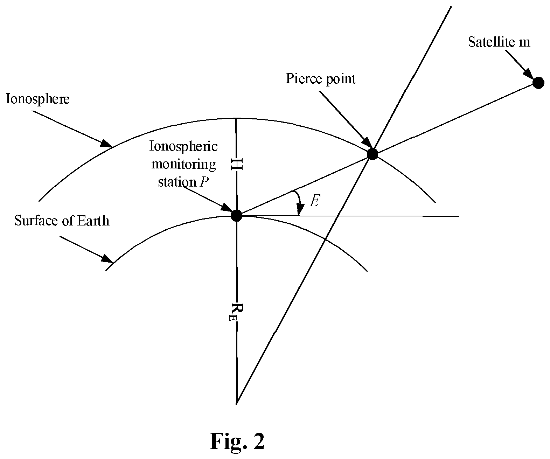

In an example, the positional relationship between the satellite m and the ionospheric monitoring station $P$ is shown in Fig. 2.

In some possible implementations of the embodiments of the present application, S103 may include: dividing the target range into a plurality of grids with the preset grid size; performing, based on the first ionospheric amplitude scintillation indexes and the positions of the pierce points, the ionospheric amplitude scintillation index interpolation on the center points of the plurality of grids which are included in the range which corresponds to the target reference station to obtain the second ionospheric amplitude scintillation indexes which correspond to the center points of the plurality of grids; and determining the target ionospheric amplitude scintillation index which corresponds to the target reference station based on the second ionospheric amplitude scintillation indexes which correspond to the center points of the plurality of grids.

In some possible implementations of the embodiments of the present application, the target range in the embodiments of the present application may be the entire Earth or certain designated areas on the Earth. The designated areas may be the areas which include receivers or reference stations.

In some possible implementations of the embodiments of the present application, when the grid dividing is performed, a regular geographic grid (such as a longitude and latitude coordinate grid (a grid which is divided by the longitude and the latitude), a Gauss-Krüger projection rectangular coordinate grid (a grid which is divided by kilometers), and the like) may be used.

In some possible implementations of the embodiments of the present application, the performing, based on the first ionospheric amplitude scintillation indexes and the positions of the pierce points, the ionospheric amplitude scintillation index interpolation on the center points of the plurality of grids which are included in the range which corresponds to the target reference station may include: performing, based on the first ionospheric amplitude scintillation indexes and the positions of the pierce points, the ionospheric amplitude scintillation index interpolation on the center points of the plurality of grids which are included in the range which corresponds to the target reference station by using the inverse distance weighted interpolation algorithm or the Kriging interpolation algorithm.

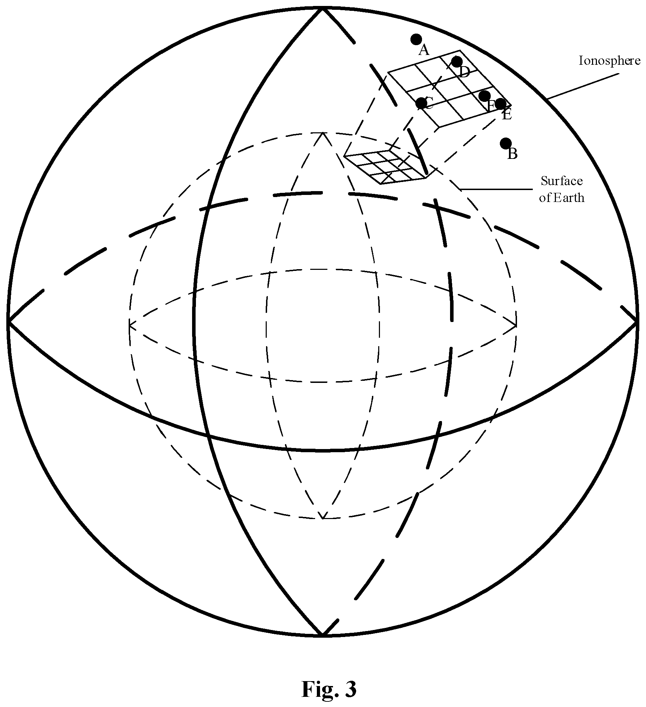

In an example, the positional relationship between the grid which is included in the range which corresponds to the target reference station and the pierce point is shown in Fig. 3.

In Fig. 3, the range which corresponds to the target reference station includes nine grids. The pierce points which are shown in Fig. 3 includes six pierce points which are the pierce points A-F, respectively. The pierce point A and the pierce point B are located outside the range of the ionosphere which corresponds to the range which corresponds to the target reference station, the pierce points C-F are located within the range of the ionosphere which corresponds to the range which corresponds to the target reference station, and the pierce point E and the pierce point F are located in the same grid within the range of the ionosphere which corresponds to the range which corresponds to the target reference station, that is, different pierce points may be located in the same grid within the range of the ionosphere which corresponds to the range which corresponds to the target reference station, that is, there may be zero, one or more pierce points in the same grid within the range of the ionosphere which corresponds to the range which corresponds to the target reference station.

It should be noted that the range which corresponds to the target reference station is located on the surface of the Earth, and the range which corresponds to the range which corresponds to the target reference station is located on the ionosphere.

The ionospheric amplitude scintillation indexes which correspond to the pierce points A-F are $S4_A$ to $S4_F$, respectively.

For the grid i of the 9 grids, it is assumed that the distances from the center point of the grid on the ionosphere which corresponds to the grid i to the pierce points A-F are $X_{Ai}$ to $X_{Fi}$, respectively.

The ionospheric amplitude scintillation index interpolation is performed on the center point of the grid i by using the inverse distance weighted interpolation algorithm to obtain the ionospheric amplitude scintillation index which corresponds to the center point of the grid i, and the ionospheric amplitude scintillation index is:

$$S4_i = \frac{\dfrac{S4_A}{X_{Ai}^2} + \dfrac{S4_B}{X_{Bi}^2} + \dfrac{S4_C}{X_{Ci}^2} + \dfrac{S4_D}{X_{Di}^2} + \dfrac{S4_E}{X_{Ei}^2} + \dfrac{S4_F}{X_{Fi}^2}}{\dfrac{1}{X_{Ai}^2} + \dfrac{1}{X_{Bi}^2} + \dfrac{1}{X_{Ci}^2} + \dfrac{1}{X_{Di}^2} + \dfrac{1}{X_{Ei}^2} + \dfrac{1}{X_{Fi}^2}}$$

In some possible implementations of the embodiments of the present application, the determining the target ionospheric amplitude scintillation index which corresponds to the target reference station based on the second ionospheric amplitude scintillation indexes which correspond to the center points of the plurality of grids may include: taking the second ionospheric amplitude scintillation index which corresponds to the center point of a single grid of the plurality of grids where the target reference station is located as the target ionospheric amplitude scintillation index.

As an example, it is assumed that the target reference station is located in the grid 6 of the nine grids, the ionospheric amplitude scintillation index which corresponds to the center point of the grid 6 is used as the target ionospheric amplitude scintillation index which corresponds to the target reference station.

In some possible implementations of the embodiments of the present application, the determining the target ionospheric amplitude scintillation index which corresponds to the target reference station based on the second ionospheric amplitude scintillation indexes which correspond to the center points of the plurality of grids may include: taking the average value, the weighted average value, the maximum value or the quadratic interpolated value of the second ionospheric amplitude scintillation indexes which correspond to the center points of the plurality of grids as the target ionospheric amplitude scintillation index.

In some possible implementations of the embodiments of the present application, when the quadratic interpolation is performed, the ionospheric amplitude scintillation index interpolation may be performed again on the center point of the single grid where the target reference station is located based on the ionospheric amplitude scintillation indexes of the center points of the plurality of grids, and taking the ionospheric amplitude scintillation index, which corresponds to the center point of the single grid where the target reference station obtained by the quadratic interpolation is located, as the target ionospheric amplitude scintillation index.

In some possible implementations of the embodiments of the present application, S 104 may include: determining the first fitting relationship between the cycle slip ratio and the target ionospheric amplitude scintillation index based on the cycle slip ratio and the target ionospheric amplitude scintillation index; determining the first threshold for early warning the target reference station of an ionospheric scintillation based on the cycle slip ratio threshold and the first fitting relationship; and using the first threshold as the amplitude scintillation index threshold.

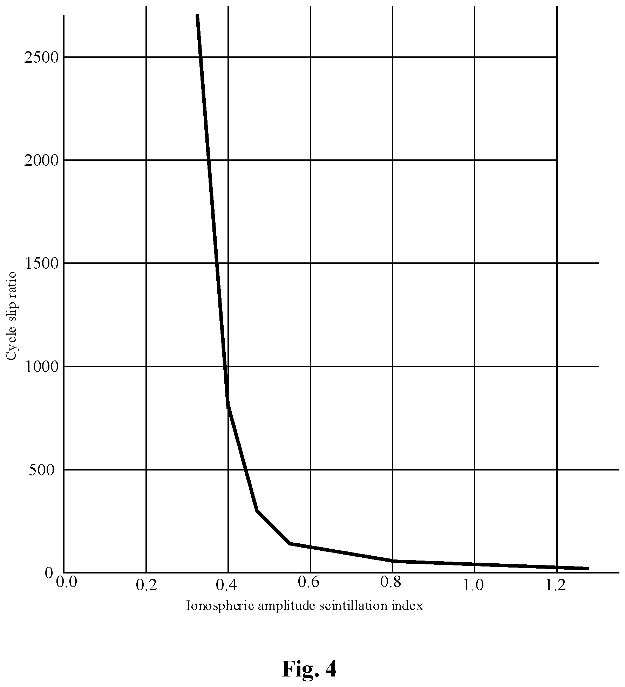

In an example, the first fitting relationship between the cycle slip ratio and the target ionospheric amplitude scintillation index which is determined based on the cycle slip ratio and the target ionospheric amplitude scintillation index is shown in Fig. 4. When the cycle slip ratio is less than 800, the data quality is unqualified, then the cycle slip ratio threshold is set to be 800. When the cycle slip ratio is 800, the ionospheric amplitude scintillation index is 0.4, then 0.4 is used as the amplitude scintillation index threshold.

In some possible implementations of the embodiments of the present application, the data quality information in the embodiments of the present application may further include the multipath index; accordingly, S104 may further include: determining the second fitting relationship between the multipath index and the target ionospheric amplitude scintillation index based on the multipath index and the target ionospheric amplitude scintillation index; determining the second threshold for early warning the target reference station of an ionospheric scintillation based on the multipath index threshold and the second fitting relationship; and using the lesser of the first threshold and the second threshold as the amplitude scintillation index threshold.

In an example, it is assumed that the first threshold for early warning the target reference station of an ionospheric scintillation which is determined based on the cycle slip ratio threshold and the first fitting relationship is 0.4, the second threshold for early warning the target reference station of an ionospheric scintillation which is determined based on the multipath index threshold and the second fitting relationship is 0.35, and 0.35 is used as the amplitude scintillation index threshold.

In some possible implementations of the embodiments of the present application, the data quality information in the embodiments of the present application may further include the carrier-to-noise ratio; accordingly, S104 may further include: determining the third fitting relationship between the carrier-to-noise ratio and the target ionospheric amplitude scintillation index based on the carrier-to-noise ratio and the target ionospheric amplitude scintillation index; determining the third threshold for early warning the target reference station of an ionospheric scintillation based on the carrier-to-noise ratio threshold and the third fitting relationship; using the smallest one of the first threshold, the second threshold, and the third threshold as the amplitude scintillation index threshold.

It should be noted that the first fitting relationship, the second fitting relationship, and the third fitting relationship in the embodiments of the present application correspond to the same time period.

In some possible implementations of the embodiments of the present application, S105 may include: determining that the target reference station is subject to the ionospheric scintillation interference and issuing an early warning under a condition that the real-time ionospheric amplitude scintillation index is greater than the amplitude scintillation index threshold.

In an example, it is assumed that the ionospheric amplitude scintillation index which is obtained by performing real-time interpolation on the target reference station is greater than the above amplitude scintillation index threshold, then it is determined that the target reference station is subject to the ionospheric scintillation interference and the early warning is issued.

In some possible implementations of the embodiments of the present application, the data quality information may further include the carrier-to-noise ratio and the multipath index; when the cycle slip ratio of the target reference station is less than the preset cycle slip ratio threshold, or the carrier-to-noise ratio of the target reference station is less than the preset carrier-to-noise ratio threshold, or the multipath index is greater than the preset multipath threshold, it is determined that the data quality information of the target reference station is abnormal. Accordingly, S105 may include: determining that the target reference station is subject to the ionospheric scintillation interference and issuing the early warning under a condition that the real-time ionospheric amplitude scintillation index is greater than the amplitude scintillation index threshold and the data quality information of the target reference station is abnormal.

It should be noted that the data quality information of the target reference station is normal when and only when the cycle slip ratio of the target reference station is not less than the preset cycle slip ratio threshold, the carrier-to-noise ratio of the target reference station is not less than the preset carrier-to-noise ratio threshold, and the multipath index is not greater than the preset multipath threshold. When the data quality information of the target reference station is normal, it is not necessary to determine that whether the target reference station is subject to the ionospheric scintillation interference.

In an example, it is assumed that the cycle slip ratio of the target reference station is less than the preset cycle slip ratio threshold, the carrier-to-noise ratio of the target reference station is less than the preset carrier-to-noise ratio threshold, and the multipath index is less than the preset multipath threshold, since the cycle slip ratio of the target reference station is less than the preset cycle slip ratio threshold, and the carrier-to-noise ratio of the target reference station is less than the preset carrier-to-noise ratio threshold, it is determined that the data quality information of the target reference station is abnormal.

It is assumed that, under this condition, the ionospheric amplitude scintillation index which is obtained by performing real-time interpolation on the target reference station is greater than the above amplitude scintillation index threshold, then it is determined that the target reference station is subject to the ionospheric scintillation interference and the early warning is issued.

It is assumed that, under this condition, the ionospheric amplitude scintillation index which is obtained by performing real-time interpolation on the target reference station is not greater than the above amplitude scintillation index threshold, then it is determined that the target reference station is not subject to the ionospheric scintillation interference. In other words, the case that the cycle slip ratio of the target reference station is less than the preset cycle slip ratio threshold and the carrier-to-noise ratio of the target reference station is less than the preset carrier-to-noise ratio threshold is not caused by the ionospheric scintillation.

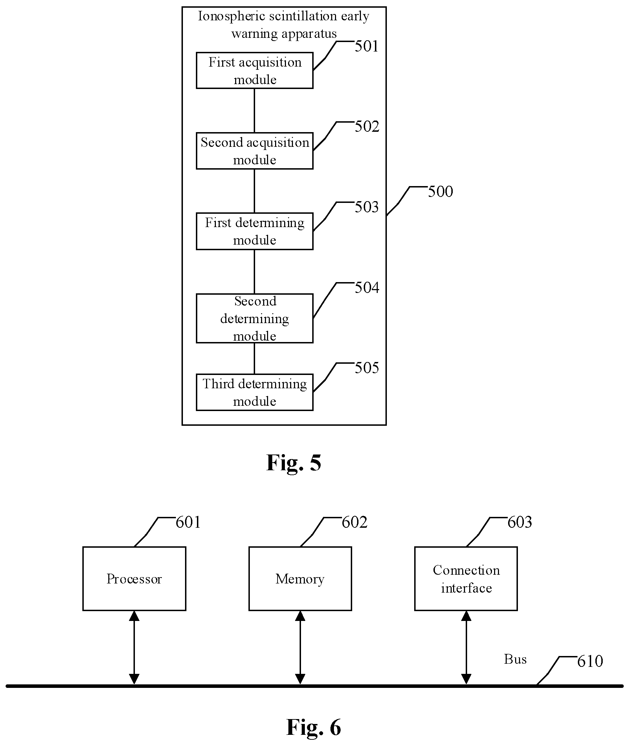

The embodiments of the present application further provide an ionospheric scintillation early warning device, as shown in Fig. 5. Fig. 5 is a schematic structural diagram of an ionospheric scintillation early warning device according to embodiments of the present application, and the ionospheric scintillation early warning device 500 may include:

a first acquisition module 501 configured to acquire the first ionospheric amplitude scintillation indexes of at least two satellites in GNSS and the positions of the pierce points which correspond to the at least two satellites each;

a second acquisition module 502 configured to acquire the parameter information and the data quality information of the target reference station, in which the parameter information includes at least the position information of the target reference station, and the data quality information includes at least the cycle slip ratio;

a first determining module 503 configured to determine the target ionospheric amplitude scintillation index which corresponds to the target reference station based on the first ionospheric amplitude scintillation indexes, the positions of the pierce points, and the position information of the target reference station;

a second determining module 504 configured to determine the amplitude scintillation index threshold for early warning the reference station of an ionospheric scintillation based on the target ionospheric amplitude scintillation index and the data quality information; and

a third determining module 505 configured to determine whether to early warn the target reference station of the ionospheric scintillation based on the real-time ionospheric amplitude scintillation index and the amplitude scintillation index threshold.

In the embodiments of the present application, the first ionospheric amplitude scintillation indexes of at least two satellites in GNSS and the positions of the pierce points which correspond to the at least two satellites each are acquired; the parameter information and the data quality information of the target reference station are acquired; the target ionospheric amplitude scintillation index which corresponds to the target reference station is determined based on the first ionospheric amplitude scintillation indexes, the positions of the pierce points, and the position information of the target reference station; the amplitude scintillation index threshold for early warning the reference station of an ionospheric scintillation is determined based on the target ionospheric amplitude scintillation index and the data quality information; and whether to early warn the target reference station of the ionospheric scintillation is determined based on the real-time ionospheric amplitude scintillation index and the amplitude scintillation index threshold. In this way, it can be determined whether the reference station is subject to ionospheric scintillation interference, and the early warning can be performed when the ionospheric scintillation interference is received, thereby ensuring that the reference station provides accurate observation data to the observation station.

In some possible implementations of the embodiments of the present application, the first determining module 503 may include:

the dividing sub-module configured to divide the target range into a plurality of grids with the preset grid size;

the interpolation sub-module configured to perform, based on the first ionospheric amplitude scintillation indexes and the positions of the pierce points, the ionospheric amplitude scintillation index interpolation on the center points of the plurality of grids which are included in the range which corresponds to the target reference station to obtain the second ionospheric amplitude scintillation indexes which correspond to the center points of the plurality of grids; and

the determining sub-module configured to determine the target ionospheric amplitude scintillation index which corresponds to the target reference station based on the second ionospheric amplitude scintillation indexes which correspond to the center points of the plurality of grids.

In some possible implementations of the embodiments of the present application, the determining sub-module may be specifically configured to:

use the second ionospheric amplitude scintillation index which corresponds to the center point of a single grid of the plurality of grids where the target reference station is located as the target ionospheric amplitude scintillation index.

In some possible implementations of the embodiments of the present application, the determining sub-module may be specifically configured to:

use the average value, the weighted average value, the maximum value or the quadratic interpolated value of the second ionospheric amplitude scintillation indexes which correspond to the center points of the plurality of grids as the target ionospheric amplitude scintillation index.

In some possible implementations of the embodiments of the present application, the interpolation sub-module may be specifically configured to:

perform, based on the first ionospheric amplitude scintillation indexes and the positions of the pierce points, the ionospheric amplitude scintillation index interpolation on the center points of the plurality of grids which are included in the range which corresponds to the target reference station by using the inverse distance weighted interpolation algorithm or the Kriging interpolation algorithm.

In some possible implementations of the embodiments of the present application, the data quality information may further include the carrier-to-noise ratio and the multipath index; when the cycle slip ratio of the target reference station is less than the preset cycle slip ratio threshold, or the carrier-to-noise ratio of the target reference station is less than the preset carrier-to-noise ratio threshold, or the multipath index is greater than the preset multipath threshold, it is determined that the data quality information of the target reference station is abnormal.

Accordingly, the third determining module 505 may be specifically configured to:

determine that the target reference station is subject to the ionospheric scintillation interference and issue the early warning under a condition that the real-time ionospheric amplitude scintillation index is greater than the amplitude scintillation index threshold and the data quality information of the target reference station is abnormal.

In some possible implementations of the embodiments of the present application, the second determining module 504 may include:

the first determining sub-module configured to determine the first fitting relationship between the cycle slip ratio and the target ionospheric amplitude scintillation index based on the cycle slip ratio and the target ionospheric amplitude scintillation index;
the second determining sub-module configured to determine the first threshold for early warning the target reference station of an ionospheric scintillation based on the cycle slip ratio threshold and the first fitting relationship; and
the third determining sub-module configured to use the first threshold as the amplitude scintillation index threshold.

In some possible implementations of the embodiments of the present application, the data quality information further includes the multipath index; and the second determining module 504 may further include:

the fourth determining sub-module configured to determine the second fitting relationship between the multipath index and the target ionospheric amplitude scintillation index based on the multipath index and the target ionospheric amplitude scintillation index;
the fifth determining sub-module configured to determine the second threshold for early warning the target reference station of an ionospheric scintillation based on the multipath index threshold and the second fitting relationship; and
the sixth determining sub-module configured to use the lesser of the first threshold and the second threshold as the amplitude scintillation index threshold.

Fig. 6 is a schematic structural diagram of a GNSS receiver terminal according to embodiments of the present application.

The GNSS receiver terminal may include the processor 601 and the memory 602 storing computer program instructions.

Specifically, the processor 601 may include a central processing unit (CPU), or an application specific integrated circuit (ASIC), or one or more integrated circuits that may be configured to implement the embodiments of the present application.

The memory 602 may include mass memory for storing data or instructions. By way of example and not limitation, the memory 602 may include a hard disk drive (HDD), a floppy disk drive, a flash memory, an optical disk, a magneto-optical disk, a magnetic tape, or a universal serial bus (USB) drive or combination of two or more of them. When appropriate, the memory 602 may include a removable or non-removable (or fixed) medium. When appropriate, the memory 602 may be internal or external to the GNSS receiver terminal. In some particular embodiments, the memory 602 is a non-volatile solid state memory.

In some particular embodiments, the memory may include a read-only memory (ROM), a random access memory (RAM), a magnetic disk storage media device, an optical storage media device, a flash memory device, an electrical, optical or other physical/tangible memory storage device. Thus, the memory generally includes one or more tangible (non-transitory) computer-readable storage media (for example, memory devices) encoded with software which includes computer-executable instructions, and the software, when executed (for example, by one or more processors), is operable to perform the operations described with reference to the ionospheric scintillation early warning method according to the present application.

The processor 601 reads and executes the computer program instructions stored in the memory 602 to implement the ionospheric scintillation early warning method according to the embodiments of the present application.

In an example, the GNSS receiver terminal may further include the communication interface 603 and the bus 610. As shown in Fig. 6, the processor 601, the memory 602, and the communication interface 603 are connected to and communicate with one another through the bus 610.

The communication interface 603 is mainly used for achieving communication among modules, apparatuses, units, and/or devices in the embodiments of the present application.

The bus 610 includes hardware, software, or both of them, coupling the components of the GNSS receiver terminal to each other. By way of example, and not limitation, the bus may include an Accelerated Graphics Port (AGP) or other graphics bus, an Enhanced Industry Standard Architecture (EISA) bus, a Front Side Bus (FSB), a Hyper Transport (HT) interconnect, an Industry Standard Architecture (ISA) bus, an Infiniband interconnect, a Low Pin Count (LPC) bus, a memory bus, an Micro channel Architecture (MCA) bus, a Peripheral Component Interconnect (PCI) bus, a PCI-Express (PCI-X) bus, a Serial Advanced Technology Attachment (SATA) bus, a Video Electronics Standards Association Local (VLB) bus or any other suitable bus or a combination of two or more of them. When appropriate, the bus 610 may include one or more buses. Although the particular buses are described and illustrated in the embodiments of the present application, any suitable bus or interconnect is contemplated by the present application.

The GNSS receiver terminal may execute the ionospheric scintillation early warning method according to the embodiments of the present application, thereby achieving the corresponding technical effects of the ionospheric scintillation early warning method according to the embodiments of the present application.

In addition, the embodiments of the present application further provide a computer-readable storage medium to implement in conjunction with the ionospheric scintillation early warning method in the above embodiments. The computer-readable storage medium has computer program instructions stored thereon; the computer program instructions, when executed by a processor, implement the ionospheric scintillation early warning method according to the embodiments of the present application. Examples of the computer-readable storage media include a non-transitory computer-readable medium such as a ROM, a RAM, a magnetic or optical disk.

The embodiments of the present application provide a computer program product; when instructions in the computer program product are executed by a processor of the GNSS receiver terminal, the GNSS receiver terminal executes the ionospheric scintillation early warning method according to the embodiments of the present application and can achieve the same technical effects, which is not described here in order to avoid repetition.

It should be noted that the present application is not limited to the particular configurations and processes described above and illustrated in the drawings. For the sake of brevity, the detailed description of the known methods is omitted here. In the above embodiments, several specific steps are described and shown as examples. However, the process of the method of the present application is not limited to the specific steps described and illustrated herein, and those skilled in the art may make various changes, modifications, and additions or change the order between the steps after understanding the gist of the present application.

The functional blocks shown in the above structural block diagrams may be implemented as hardware, software, firmware, or a combination thereof. When implemented as hardware, it may be, for example, an electronic circuit, an application specific integrated circuit (ASIC), appropriate firmware, a plug-in, a function card, and the like. When implemented as software, the elements of the present application are programs or code segments which are used for performing a desired task. The programs or the code segments may be stored in a machine-readable medium or transmitted over a transmission medium or a communication link by a data signal which is carried in a carrier wave. The "machine-readable medium" may include any medium which can store or transmit information. Examples of the machine-readable medium include an electronic circuit, a semiconductor memory device, a ROM, a flash memory, an erasable read only memory (EROM), a floppy disk, a compact disc read-only memory (CD-ROM), an optical disk, a hard disk, a fiber optic medium, a radio frequency (RF) link, and the like. The code segments may be downloaded via a computer network such as Internet, intranet, and the like.

It should also be noted that, in the exemplary embodiments mentioned in the present application, some methods or systems are described based on a series of steps or apparatuses. However, the present application is not limited to the order of the above steps, that is, the steps may be performed in the order mentioned in the embodiments, or may be performed in the order different from that in the embodiments, or several steps may be performed at the same time.

The aspects of the present application are described above with reference to the flowcharts and/or block diagrams of the methods, apparatuses (systems), and computer program products according to the embodiments of the present application. It should be understood that each block in the flowcharts and/or block diagrams, and combinations of blocks in the flowcharts and/or block diagrams, may be implemented by the computer program instructions. These computer program instructions may be provided to a processor of a general purpose computer, a special purpose computer or other programmable data processing apparatus to produce a machine, so that these instructions which are executed by the processor of the computer or other programmable data processing apparatus enable the implementation of the functions/actions specified in one or more blocks of the flowcharts and/or block diagrams. Such processor may be, but is not limited to, a general purpose processor, a special purpose processor, an application specific processor, or a field programmable logic circuit. It may also be understood that each block in the block diagrams and/or flowcharts and the combinations of blocks in the block diagrams and/or flowcharts may also be implemented by special purpose hardware that performs the specified functions or actions or may be implemented by the combinations of the special purpose hardware and the computer instructions.

The above are only specific implementations of the present application, those skilled in the art may clearly understand that the specific working processes of the above systems, modules and units may be referred to the corresponding processes in the foregoing method embodiments, which is not repeated here for the convenience and brevity of the description. It should be understood that the protection scope of the present application is not limited to this, and any person skilled in the art can easily think of various equivalent modifications or replacements within the technical scope disclosed in the present application, and these modifications or replacements should all be covered within the scope of protection of the present application.

**Claims**

1. An ionospheric scintillation early warning method, comprising:

   acquiring first ionospheric amplitude scintillation indexes of at least two satellites of Global Navigation Satellite System (GNSS) and positions which respectively correspond to pierce points of the at least two satellites;
   acquiring parameter information and data quality information of a target reference station, wherein the parameter information comprises at least position information of the target reference station, and the data quality information comprises at least a cycle slip ratio;
   determining a target ionospheric amplitude scintillation index which corresponds to the target reference station based on the first ionospheric amplitude scintillation indexes, the positions of the pierce points, and the position information of the target reference station;
   determining an amplitude scintillation index threshold for early warning a reference station of an ionospheric scintillation based on the target ionospheric amplitude scintillation index and the data quality information; and
   determining whether to early warn the target reference station of an ionospheric scintillation based on a real-time ionospheric amplitude scintillation index and the amplitude scintillation index threshold.

2. The method according to claim 1, wherein the determining a target ionospheric amplitude scintillation index which corresponds to the target reference station based on the first ionospheric amplitude scintillation indexes, the positions of the pierce points, and the position information of the target reference station comprises:

   dividing a target range into a plurality of grids with a preset grid size;
   performing, based on the first ionospheric amplitude scintillation indexes and the positions of the pierce points, ionospheric amplitude scintillation index interpolation on center points of the grids which are included in a range corresponding to the target reference station to obtain second ionospheric amplitude scintillation indexes which correspond to the center points of the grids; and
   determining the target ionospheric amplitude scintillation index which corresponds to the target reference station based on the second ionospheric amplitude scintillation indexes which correspond to the center points of the grids.

3. The method according to claim 2, wherein the determining the target ionospheric amplitude scintillation index which corresponds to the target reference station based on the second ionospheric amplitude scintillation indexes which correspond to the center points of the grids comprises:
   taking the second ionospheric amplitude scintillation index which corresponds to a center point of a single one of the plurality of grids where the target reference station is located as the target ionospheric amplitude scintillation index.

4. The method according to claim 2, wherein the determining the target ionospheric amplitude scintillation index which corresponds to the target reference station based on the second ionospheric amplitude scintillation indexes which correspond to the center points of the plurality of grids comprises:
   taking an average value, a weighted average value, a maximum value, or a quadratic interpolated value of the second ionospheric amplitude scintillation indexes which correspond to the center points of the grids as the target ionospheric amplitude scintillation index.

5. The method according to claim 2, wherein the performing, based on the first ionospheric amplitude scintillation indexes and the positions of the pierce points, ionospheric amplitude scintillation index interpolation on center points of the plurality of grids which are included in a range corresponding to the target reference station comprises:
performing, based on the first ionospheric amplitude scintillation indexes and the positions of the pierce points, the ionospheric amplitude scintillation index interpolation on the center points of the plurality of grids which are included in the range which corresponds to the target reference station by using an inverse distance weighted interpolation algorithm or a Kriging interpolation algorithm.

6. The method according to claim 1, wherein the data quality information further comprises a carrier-to-noise ratio and a multipath index, and when the cycle slip ratio of the target reference station is less than a preset cycle slip ratio threshold, or the carrier-to-noise ratio of the target reference station is less than a preset carrier-to-noise ratio threshold, or the multipath index is greater than a preset multipath threshold, the data quality information is determined to be abnormal; and
the determining whether to early warn on a target reference station of an ionospheric scintillation based on a real-time ionospheric amplitude scintillation index and the amplitude scintillation index threshold comprises:
determining that the target reference station is subject to ionospheric scintillation interference and issuing an early warn under a condition that the real-time ionospheric amplitude scintillation index is greater than the amplitude scintillation index threshold and the data quality information is abnormal.

7. The method according to claim 1, wherein the determining an amplitude scintillation index threshold for early warning a reference station of an ionospheric scintillation based on the target ionospheric amplitude scintillation index and the data quality information comprises:

determining a first fitting relationship between the cycle slip ratio and the target ionospheric amplitude scintillation index based on the cycle slip ratio and the target ionospheric amplitude scintillation index;
determining a first threshold for early warning of the target reference station of the ionospheric scintillation based on a cycle slip ratio threshold and the first fitting relationship; and
using the first threshold as the amplitude scintillation index threshold.

8. The method according to claim 7, wherein the data quality information further comprises a multipath index; and
the determining an amplitude scintillation index threshold for early warning a reference station of an ionospheric scintillation based on the target ionospheric amplitude scintillation index and the data quality information further comprises:

determining a second fitting relationship between the multipath index and the target ionospheric amplitude scintillation index based on the multipath index and the target ionospheric amplitude scintillation index;
determining a second threshold for early warning the target reference station of the ionospheric scintillation based on a multipath index threshold and the second fitting relationship; and
taking the smaller of the first threshold and the second threshold as the amplitude scintillation index threshold.

9. An ionospheric scintillation early warning device, comprising:

a first acquisition module configured to acquire first ionospheric amplitude scintillation indexes of at least two satellites of GNSS and positions which respectively correspond to pierce points of the at least two satellites;
a second acquisition module configured to acquire parameter information and data quality information of a target reference station, wherein the parameter information comprises at least position information of the target reference station, and the data quality information comprises at least a cycle slip ratio;
a first determining module configured to determine a target ionospheric amplitude scintillation index which corresponds to the target reference station based on the first ionospheric amplitude scintillation indexes, the positions of the pierce points, and the position information of the target reference station;
a second determining module configured to determine an amplitude scintillation index threshold for early warning a reference station of an ionospheric scintillation based on the target ionospheric amplitude scintillation index and the data quality information; and
a third determining module configured to determine whether to early warn the target reference station of an ionospheric scintillation based on a real-time ionospheric amplitude scintillation index and the amplitude scintillation index threshold.

10. A GNSS receiver terminal comprising a processor and a memory having stored computer program instructions thereon, wherein
the processorwhen reads and executes the computer program instructions implement the ionospheric scintillation early warning method according to any one of claims 1-8.

11. A computer-readable storage medium having stored thereon computer program instructions which, when executed by a processor, implement the ionospheric scintillation early warning method of any one of claims 1-8.

12. A computer program product, wherein instructions in the computer program product, when executed by a processor of a GNSS receiver terminal, cause the GNSS receiver terminal to perform the ionospheric scintillation early warning method of any one of claims 1-8.

Acquiring the first ionospheric amplitude scintillation indexes of at least two satellites in GNSS and the positions of the pierce points which correspond to the at least two satellites each ⟍S101

Acquiring the parameter information and the data quality information of the target reference station, in which the parameter information includes at least the position information of the target reference station, and the data quality information includes at least the cycle slip ratio ⟍S102

Determining the target ionospheric amplitude scintillation index which corresponds to the target reference station based on the first ionospheric amplitude scintillation indexes, the positions of the pierce points, and the position information of the target reference station ⟍S103

Determining the amplitude scintillation index threshold for early warning a reference station of an ionospheric scintillation based on the target ionospheric amplitude scintillation index and the data quality information ⟍S104

Determining whether to early warn the target reference station of an ionospheric scintillation based on the real-time ionospheric amplitude scintillation index and the amplitude scintillation index threshold ⟍S105

**Fig. 1**

Satellite m

Pierce point

Ionosphere

Ionospheric
monitoring
station $P$

$H$

Surface of Earth

$E$

$R_E$

**Fig. 2**

Ionosphere

Surface
of Earth

**Fig. 3**

**Fig. 4**

Ionospheric scintillation early
warning apparatus

First acquisition
module ⌐501

Second acquisition
module ⌐502

First determining
module ⌐503

⌐500

Second
determining
module ⌐504

Third determining
module ⌐505

**Fig. 5**

Processor ⌐601

Memory ⌐602

Connection
interface ⌐603

Bus ⌐610

**Fig. 6**

## INTERNATIONAL SEARCH REPORT

| International application No. |
|---|
| **PCT/CN2023/099546** |

**A.    CLASSIFICATION OF SUBJECT MATTER**

G01S 19/23(2010.01)i;  G01D21/02(2006.01)i;  G01D7/08(2006.01)i

According to International Patent Classification (IPC) or to both national classification and IPC

**B.    FIELDS SEARCHED**

Minimum documentation searched (classification system followed by classification symbols)

IPC:  G01S G01D

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 千寻位置网络有限公司, 电离层, 闪烁, 穿刺点, 基准站, 周跳比, 阈值, 指数, 位置, 卫星, 预警, 报警, 目标, GNSS, ionospher+, blink, station, warn+, index, threshold, target

**C.    DOCUMENTS CONSIDERED TO BE RELEVANT**

| Category* | Citation of document, with indication, where appropriate, of the relevant passages | Relevant to claim No. |
|---|---|---|
| A | US 2017276793 A1 (FUGRO INTERSITE B V) 28 September 2017 (2017-09-28) description, paragraphs [0010]-[0030], and figures 1-4 | 1-12 |
| A | CN 105116469 A (22ND RESEARCH INSTITUTE OF CHINA ELECTRONICS TECHNOLOGY GROUP CORPORATION) 02 December 2015 (2015-12-02) entire document | 1-12 |
| A | CN 110058268 A (GUILIN UNIVERSITY OF ELECTRONIC TECHNOLOGY) 26 July 2019 (2019-07-26) entire document | 1-12 |
| A | CN 113031036 A (CHINA UNIVERSITY OF MINING AND TECHNOLOGY) 25 June 2021 (2021-06-25) entire document | 1-12 |
| A | CN 113267792 A (54TH RESEARCH INSTITUTE OF CHINA ELECTRONICS TECHNOLOGY GROUP CORPORATION) 17 August 2021 (2021-08-17) entire document | 1-12 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 August 2023** | **31 August 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/099546**

| Patent document cited in search report | | | Publication date (day/month/year) | Patent family member(s) | | | Publication date (day/month/year) |
|---|---|---|---|---|---|---|---|
| US | 2017276793 | A1 | 28 September 2017 | US | 10551505 | B2 | 04 February 2020 |
| CN | 105116469 | A | 02 December 2015 | None | | | |
| CN | 110058268 | A | 26 July 2019 | None | | | |
| CN | 113031036 | A | 25 June 2021 | None | | | |
| CN | 113267792 | A | 17 August 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211183855